(19) Europäisches Patentamt
European Patent Office
Office européen des brevets

(11) EP 0 612 973 B1

## (12) EUROPEAN PATENT SPECIFICATION

(45) Date of publication and mention
of the grant of the patent:
**20.05.1998 Bulletin 1998/21**

(51) Int Cl.6: **G01B 7/00**, G01D 5/18,
G01N 27/00, G01B 7/34

(21) Application number: **94300618.9**

(22) Date of filing: **27.01.1994**

(54) **Displacement transducer**

Weggeber

Capteur de déplacement

(84) Designated Contracting States:
**DE FR GB IT NL**

(30) Priority: **17.02.1993 GB 9303111**

(43) Date of publication of application:
**31.08.1994 Bulletin 1994/35**

(73) Proprietor: **HITACHI EUROPE LIMITED**
**Maidenhead, Berkshire, SL6 8YA (GB)**

(72) Inventor: **White, Julian D.**
**Histon, Cambridge, CB4 4HY (GB)**

(74) Representative: **Read, Matthew Charles et al**
**Venner Shipley & Co.**
**20 Little Britain**
**London EC1A 7DH (GB)**

(56) References cited:
**US-A- 4 767 973**

- **JOURNAL OF LOW TEMPERATURE PHYSICS, FEB. 1986, USA, VOL. 62, NR. 3-4, PAGE(S) 345 - 373, ISSN 0022-2291 Averin D V et al 'Coulomb Blockade of single-electron tunneling, and coherent oscillations in small tunnel junctions'**
- **PHYSICAL REVIEW LETTERS, vol.59, no.1, 6 July 1987, NEW YORK US pages 109 - 112 T.A.FULTON ; G.J.DOLAN 'OBSERVATIONS OF SINGLE-ELECTRON CHARGING EFFECTS IN SMALL TUNNEL JUNCTIONS'**
- **PHYSICAL REVIEW LETTERS, vol.67, no.22, 25 November 1991, NEW YORK US pages 3148 - 3151 T.A.FULTON ET AL 'DETERMINATION OF COULOMB-BLOCKADE RESISTANCES AND OBSERVATION OF THE TUNNELING OF SINGLE ELECTRONS IN SMALL-TUNNEL-JUNCTION CIRCUITS'**
- **JOURNAL OF VACUUM SCIENCE AND TECHNOLOGY: PART A., vol.6, no.2, March 1988, NEW YORK US pages 470 - 471 M.NIKSCH ; G.BINNIG 'PROPOSAL FOR A NOVEL GRAVITATIONAL-WAVE SENSOR'**
- **REVIEW OF SCIENTIFIC INSTRUMENTS., vol.61, no.12, December 1990, NEW YORK US pages 3763 - 3768 M.F.BOCKO 'THE SCANNING TUNNELING MICROSCOPE AS A HIGH-GAIN ,LOW-NOISE DISPLACEMENT SENSOR'**
- **JOURNAL OF VACUUM SCIENCE AND TECHNOLOGY: PART A., vol.8, no.1, January 1990, NEW YORK US pages 383 - 387 T.GÖDDENHENRICH ET AL 'FORCE MICROSCOPE WITH CAPACITIVE DISPLACEMENT DETECTION'**
- **IEEE Transactions on Electron Devices, Sept.1994, Vol.41, No.9, pages 1628-1638, K. Yano et al.**

## Description

This invention relates to a displacement transducer which may resolve displacements of the order of fractions of an angstrom unit.

Displacement transducers which utilise a conventional FET are known from US-A-4 767 973, in which a movable member forms a capacitive coupling with the gate of the FET, so as to control its source/drain current as a function of displacement of the movable member. The current that flows is a conventional current consisting of very large numbers of electrons.

Coulomb blockade electrometers have previously been proposed - D. V. Averin and K. K. Likharev, Journal Low Temperature Physics 62, 345 (1986); T. A. Fulton and G. J. Dolan, Physics Review Letters 59, 109 (1987). A Coulomb blockade electrometer is a three terminal device which provides a direct method of converting a small charge variation on the plate of a capacitor into a change of current passing through the device. Currently, Coulomb blockade electrometers have demonstrated a sensitivity which is several orders of magnitude greater than current commercial electrometers. The Coulomb blockade electrometer typically consists of a nanometrescale conducting island, formed on a substrate to which source and drain connections are formed through respective tunneling barrier junctions. A further capacitive coupling to the island is provided to allow charge to be applied thereto. The applied charge alters the current flowing between the source and drain connections. When the conducting island is made sufficiently small, the current flow between the source and drain can be characterised in terms of single electrons, and when one electron flows from the source onto the island, another electron is caused to flow from the island to the drain. The rate at which this process occurs is dependent upon the charge applied through the capacitive coupling to the island.

In accordance with the present invention, it has been appreciated that such an arrangement may be modified in order to provide a displacement transducer.

Broadly stated, in accordance with the present invention there is provided a displacement transducer comprising means for providing a charge storage region, a source and a drain for charge carriers to the region, charge flow from the source to the drain through the charge storage region being limited by Coulomb blockade, and a movable member that forms a capacitive coupling with the charge storage region to affect the conductivity between the source and drain as a function of the displacement ($\delta x$) of the member.

In order that the invention may be more fully understood an embodiment thereof will now be described with reference to the accompanying drawings, in which:

Figure 1 is a circuit diagram illustrating the principles of operation of a Coulomb blockade electrometer used in an embodiment of the present invention;

Figure 2 is a graph of the source-drain current of the device shown in Figure 1, versus charge on the conducting island;

Figure 3 is a schematic diagram of a displacement transducer in accordance with the invention;

Figure 4 is a graph illustrating operational noise characteristics of the transducer shown in Figure 3;

Figure 5 is a schematic diagram of a conventional atomic force microscope (AFM) that uses a scanning tunneling microscope as a displacement detector; and

Figure 6 is a schematic diagram of an AFM with a displacement transducer in accordance with the invention.

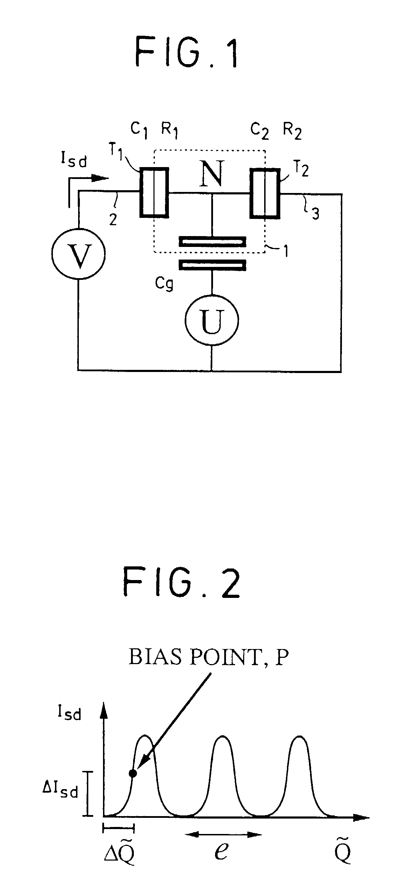

Referring to Figure 1, an electrically conducting island 1 shown in dotted outline fabricated on a nanoscale, typically $2\mu m^2$ is provided with source and drain connections 2, 3 through tunnel junctions $T_1$ and $T_2$ having respective resistances and capacitances $C_1 R_1$ and $C_2 R_2$. A voltage source V can produce a source-drain current $I_{sd}$. A voltage source U applies charge through a capacitive coupling $C_g$ such that N electrons are provided on the island 1.

As is known to those skilled in the art, for nanofabricated structure, the energy of electrons on a conducting island can inhibit further electrons from entering the island, unless the charging energy of an electron entering the island exceeds a given threshhold. This is known as the Coulomb blockade effect, in which the charge on the electrons, itself produces a blockade to further charge transfer.

The phenomenon of Coulomb blockade becomes prominent when the total capacitance of the island $C_\Sigma$ becomes sufficiently small such that the charging energy $E_c$ (given by $e^2/2C_\Sigma$, where e is the electronic charge) for an electron being transported onto the island is $\gg k_b T$, the thermal energy. This condition can be achieved by forming the island to a sufficiently small size and cooling it, typically to the order of 20mK. In order to observe the effect, it is necessary to ensure that the quantum fluctuations in the source and drain leads 2, 3 do not overcome the charging energy barrier $E_c$, which is achieved by means of the high resistance of the tunnel junctions $T_1$ and $T_2$. Under these circumstances, the Coulomb blockade effect will manifest itself as a high impedance to the source drain current $I_{sd}$, until the voltage differences across the tunnel barriers $T_1$ and $T_2$ are of the order of $E_c/e$. Under these circumstances, the electrons from the source connection 2 will then have sufficient energy to overcome the electrostatic energy barrier presented by the island 1 and the tunnel junctions $T_1$ and $T_2$ and conduction takes place as in a conventional, large capacitance tunnel junction device.

Considering this in more detail, the island 1 is isolated from the source and drain connection by the large resistances of tunnel junctions $T_1$ and $T_2$, and thus the

number of electrons N on the island is constant for a constant value of voltage U. When the voltage U is varied, an extra charge $\tilde{q}$ (=$C_g$U) is induced on the island 1. The variation of $I_{sd}$ with $\tilde{q}$ at low temperatures ($k_bT \ll E_c$) is shown in Figure 2. When U=0 and V≪$E_c$/e, transport through the island is impeded by Coulomb blockade and this can be regarded as being due to an energy gap between the states where the island has a charge -Ne and -(N+1)e. By changing $\tilde{q}$ it is possible to make these states degenerate, effectively lifting the Coulomb blockade at which point the device conducts with a source-drain current $I_{sd}$ of ~V/2R (assuming $R_1$=$R_2$=R). Specifically, the current is a maximum for $\tilde{q}$ =|e|/2. When $\tilde{q}$ =|e| then the device is returned to a state equivalent to the zero gate bias condition, where there is now an energy gap between the states -(N+1) e and -(N+2)e. This process is cyclic with $I_{sd}$ oscillating from low to high values and then back again as the induced charge on the island increases (or decreases), where the period of oscillation in $\tilde{q}$ is |e|. Thus, by changing $\tilde{q}$ it is possible to change drastically the conductivity of the island 1, making the device capable of measuring variations of gate charge at a level many orders of magnitude less then the electronic charge e.

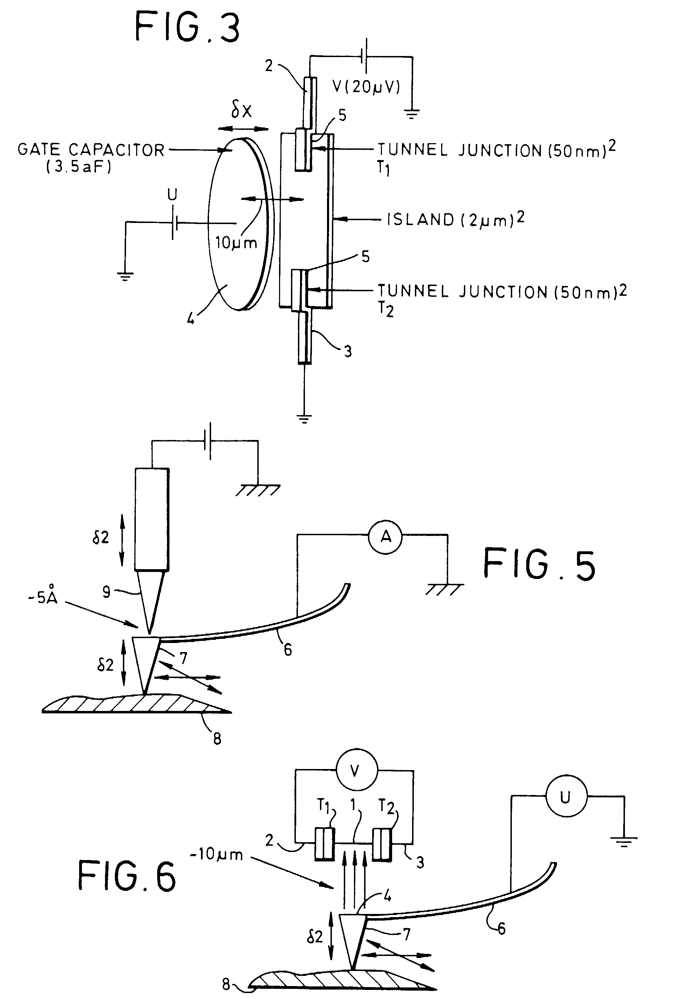

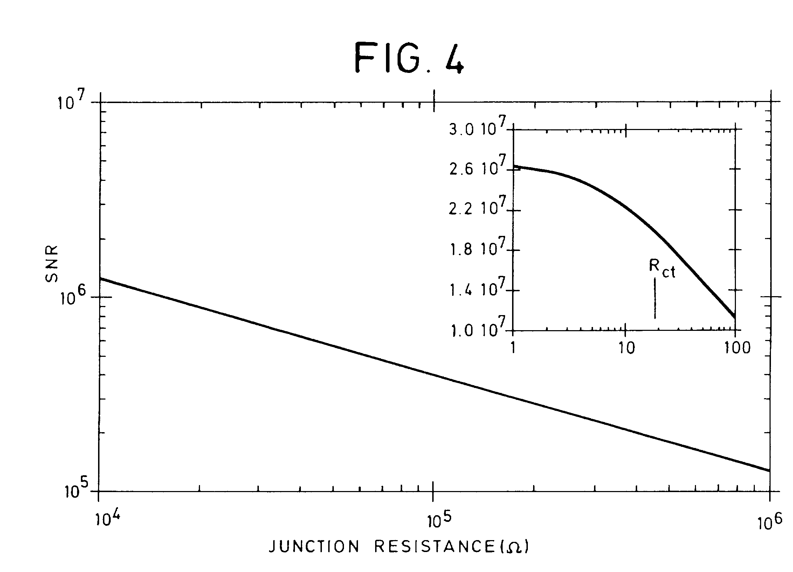

In accordance with the invention, it has been appreciated that by changing $\tilde{q}$ as a function of distance, an extremely sensitive displacement transducer can be provided. More particularly, in accordance with an embodiment of the invention shown in Figure 3, the value of $\tilde{q}$ is varied by changing $C_g$ at constant bias U. The island 1 consists of a metal plate having an area A of, in this example 2μm$^2$ which has a self capacitance, $C_s$ of typically 3x10$^{-17}$ farads. Onto this is lithographically deposited the two tunnel junctions $T_1$, $T_2$ each with an area of ~50nm$^2$. Typically, the island 1 is made of aluminium, as are the contacts 2, 3, with a layer of oxide 5 therebetween to form the tunnel junctions $T_1$, $T_2$ leading to $C_1$=$C_2 \approx$ 2.2x10$^{-16}$ farads, evaluated from parameters given in T. A. Fulton and G. J. Dolan, Physics Review Letters 59, 109 (1987) and T. A. Fulton, P. L. Gammel and L. N. Dunkelberger, Physics Review Letters 67, 3148 (1991) for A1/A1O$_x$/A1 junctions with the resistances, $R_1$ and $R_2$ set at 500KΩ. Additionally, a gate is formed by providing a conducting plate 4 over the island 1 at a reference height X defined as 10μm, whence the gate capacitance can be estimated from $C_g$= $\varepsilon_0$ A/X which in this case gives a capacitance of ~3.5x10$^{-18}$ farads, (note that both $C_g$ and $C_s$ do not significantly contribute to $C_\Sigma$).

Under these conditions, $E_c$ for the island can be computed to be 0.2meV (with $C_\Sigma$ =$C_1$+$C_2$+$C_s$+$C_g$). The device needs to be cooled to 20mK for $E_c \gg k_bT$ in order to reduce the thermal fluctuations of N to an acceptable level. To achieve the previously described condition V≪$E_c$/e, the bias voltage is set to 20μV.

In this configuration the gate capacitance C is varied by changing the plate separation by an amount δX, which leads to $\tilde{q}$ varying by |δ$\tilde{q}$ |=$C_g$U|δX|/X. This is then translated to a change in $I_{sd}$ via the the transfer function d$I_{sd}$/d$\tilde{q}$ according to the graph shown in Figure 2. In order to optimise the sensitivity of the device, the magnitude of the transfer function should be as large as possible. Referring back to Figure 2, the optimum bias point P is marked and for the device parameters given above, the current at P is 1nA and the magnitude of the transfer function (≈Δ$\tilde{q}$ /Δ$I_{sd}$) is found to be approximately 2x10$^{-9}$ Coulomb/ampere.

As a consequence of higher order tunneling processes there is another contribution to current passing through the device which is termed as co-tunneling, that arises from electrons being transported through the island via virtual intermediate states, leaving N unchanged but still resulting in an electron being effectively transported through the island. For a full explanation of co-tunneling see: D.V. Averin and A.A. Odintsov, Phys. Lett. A 140, 251 (1989) and D.V. Averin and Yu V. Nazarov, Phys. Rev. Lett 65, 2446 (1990). For recent experimental work in this area see: L.J. Geerligs, D.V. Averin, and J.E. Mooij, Phys. Rev. Lett. 65, 3037 (1990) and A.E. Hanna, M.T. Tuominen, and M. Tinkham, Phys. Rev. Lett 68, 3228 (1992).

If $E_1$ and $E_2$ are the energies associated with tunneling across the respective junctions and the condition eV<$E_1$, $E_2$ is adequately satisfied, the current due to co-tunneling, $I_{ct}$ is given by:

$$I_{ct} = \frac{h}{24\pi^2 R_1 R_2} [\frac{1}{E_1} + \frac{1}{E_2}]^2 V^3, \qquad (1)$$

which is the zero temperature approximation from the work of Averin and Odintsov (**supra**). Co-tunneling is at present under active investigation and there are many open questions regarding its behaviour in different situations, but in order to evaluate the expected resolution of the displacement transducer, a semi-quantative method is adopted here in which the two components are assumed to be independent. It has recently been shown by Zimmerli et al (G. Zimmerli, T.M. Eiles, R.L. Kautz and John M. Martinis, Appl. Phys. Lett. 61, 237, [1992]) that the ultimate sensitivity of a Coulomb blockade electrometer is determined by Shot noise in the curent passing through the device, where the mean-square Shot noise current <δ I$^2$>=2e($I_{sd}$+$I_{ct}$)B, (B being the bandwidth of the measurement apparatus). Although in the above work the authors found that at 100Hz, the noise in their devices was dominated by a component with a 1/f characteristic, thought to arise from charge trapping and de-trapping in the AlO$_x$ barrier. For the purposes of this study such effects are assumed to be negligible. In addition it is taken as fact that the terminal noise current can be sufficiently reduced by choosing a suitably small combination of temperature and measurement bandwidth (for a discussion of thermally induced electrical noise see: J.B. Johnson, Phys. Rev., 32, 97 [1928] and H. Nyquist, Phys. Rev., 32, 110

[1928]).

In order to evaluate the signal to noise ratio (SNR), defined as $I_{sd}(max)/2\sqrt{<\delta I^2>}$ it is necessary to consider the effects of the magnitudes of the junctions resistances $R_1$ and $R_2$. Simply speaking for low junction resistances, $I_{ct}$ rises more rapidly than $I_{sd}$ due to the $R^{-2}$ dependence of the former and $R^{-1}$ dependence of the latter. Thus for low R, $I_{ct}$ is the dominant contribution to the current flowing through the device. This is in contrast to the situation for large resistances where due to to the same reason the co-tunneling will be negligble in comparison to $I_{sd}$. In order to analyse this in more detail using equation (1), the approximation that $E_1=E_2 E_c$ is taken to simplify the analysis. It is found that in the limit of R=0 the SNR goes to a constant value of $(\pi E_c)(3/he-BV)^{0.5}$. The point below which the co-tunneling in the device becomes significant (i.e. when $I_{ct} = I_{sd}$) is found to as $R_{ct}=2h(V/\pi E_c)^{2/3}$. $R_{ct}$ is a useful pointer for indicating whether, for a given junction resistance, co-tunneling is a significant factor. From the SNR the effective charge noise $|\delta \tilde{q}_N|$ can be evaluated via the inverse of the transfer function magnitude at the bias point P. The charge noise finally determined the minimum displacement noise $|\delta X_N|/X=4|\delta \tilde{q}_N|/e$, (as the transfer function is linear then $(SNR)^{-1}=|\delta X_N|/X)$.

One application of the displacement transducer is as a motion sensor in a resonant mass gravitational wave observatory. Such sensors consist of a large bar of aluminium or niobium ($\sim10^3$kg-$10^4$kg) suspended in a vacuum and often cooled to liquid helium temperatures or below. Under these circumstances the bar responds to incident gravitational radiation by undergoing a quadrapole vibration at a resonant frequency of around $10^3$Hz, and for ordinary aluminium the damping or so called Q of this vibration is 106. With these quantities the signal to noise ratio (SNR), which is defined as $\sqrt{<\delta I^2>}/I_{sd}(max)$ is plotted as a function of resistance in Figure 4. The insert shows the behaviour at low junction resistances, where the change in gradient marks the points at which co-tunneling become dominant and is defined as $R_{ct}$. It should be noted that $R_{ct}$ 17$\Omega$ in this device which is far too low for the proper operation of the electrometer. The behaviour of the noise for more useful resistances (> 25K$\Omega$ ) is shown in the main panel and in this range exhibits a steady $R^{-0.5}$ gradient indicating the absence of any effect due to the co-tunneling current. From this curve, the SNR at 500K$\Omega$ gives a noise current in the device of 1x10$^{-16}$A which is a factor of 10$^{-7}$ less than $I_{sd}$. By using the inverse transfer function evaluated above a noise current of this magnitude corresponds to $|\delta Q|$ of 2.3x10$^{-25}$ C or 1.4x10$^{-6}$ e which gives a minimum sensitivity to vibration ($|\delta X|/X$) of 6x10$^{-6}$ or an amplitude of vibration of 0.6Å of the plate which forms the gate in the above device. Displacements of less than one atomic spacing ($\sim$3Å) can therefore be resolved.

Such a displacement resolution although very small is coarser than is presently needed for the detection of gravitational radiation where the vibrational amplitude of the excited aluminium bars is <10$^{-15}$m, but the parameters taken above are pessimistic first estimates of those presently achievable and by no means respresent an optimised combination. There are many ways in which the sensitivity of the device can be suitably increased. For example, it is possible to reduce X. The value of 10$\mu$m taken above is an estimate of what can be achieved with precision machining but with microfabricated techniques (K. D. Wise and K. Najafi, Science, 254, 1335 [1991]) the dimension X can be reduced below 1$\mu$m, making a gain of 10-100 in the sensitivity of the device. If X is reduced, then in order that $C_g$ is not increased unduly past the point which $C_g$ begins to contribute significantly to $C_\Sigma$ it is also desirable to make a corresponding reduction in A, the area of island 1.

Alternatively, if the size of the junctions can be significantly reduced , leading to a concomitant increase in $E_c$, V could then be increased correspondingly, increasing $I_{sd}$. This is also desirable as it would also increase the temperature at which the devices could be operated, ultimately leading to an electrometer functioning at room temperature, (the device described above is only operable at 20mK). For this to be possible the size of the tunnel junctions would have to be reduced to a few nanometres on a side, increasing Ec/k$\sim$2000K, the current could then be increased by a factor of 100, improving the sensitivity of the device by an order of magnitude. Together these improvements would enable the noise floor of the device to be reduced <10$^{-4}$m. These improvements means electrometer based transducers may be used in gravitational wave antennas.

Those skilled in the art will appreciate that a displacement transducer according to the invention may be used in many other situations where high resolution is required. For example, the transducer could be employed as the motion transducer in a cryogenic atomic force microscope (AFM). Figure 5 illustrates schematically a conventional (AFM) wherein the deflection of a cantilever 6 is sensed, whilst having its tip 7 dragged over a surface 8. The deflections are very small (<10$^{-9}$m). Presently there are two main methods of detecting this deflection, the primary method uses a laser interferometer. Unfortunately there are many applications in which such a detection scheme is not practical (e.g. at cryogenic temperatures). An alternative method to detect the cantilever deflection is illustrated in Figure 5 and utilises a piggy-backed scanning tunneling microscope (STM) tip 9 which tunnels off the back of the cantilever 6, such that STM moves in sympathy with the AFM tip and the Z-deflection of the STM is taken to be that of the cantilever. This method however tends to be unreliable, mainly due it is thought, to surface contamination.

In accordance with the invention, an electrometer transducer as described with reference to Figure 3 is used instead to sense the deflection, as illustrated in Figure 6 with the cantilever 6 acting as the gate capacitor plate 4. In this configuration the cantilever 6 receives the voltage bias U relative to the central island 1. The distance between the cantilever 6 and the island 1 is typically a few microns and due to the absence of the STM tunneling tip, surface contamination on the cantilever 6 does not interfere with the operation of the transducer.

Relative to the case of the gravitational wave detector, the bandwidth over which the tunnel current within the electrometer is detected needs to be increased substantially as the cantilever would not move at a well defined frequency, as it motion would be governed by the surface under investigation. The frequency of the deflection of the cantilever is dependent on the surface profile and the speed at which the AFM tip is dragged over the surface. The inevitable increase in bandwidth, perhaps by a factor of many orders of magnitude would inevitably mean that the deflection sensitivity would be reduced relative to the case cited above, but as the noise current is $\propto B^{0.5}$, then this would lead to a degradation in the sensitivity by a factor of only $10^3$ even if the bandwidth were increased by $10^6$.

Some amplification of the resulting signal from the transducer may be necessary as the size of the current modulations will be ~0.1fA or less, which can be achieved with an external quantum limited amplifier such as a SQUID.

## Claims

1. A displacement transducer comprising:
   means for providing a charge storage region (1);

   a source (2) and a drain (3) for charge carriers to the region, charge flow from the source to the drain through the charge storage region being limited by Coulomb blockade; and a movable member (4) that forms a capacitive coupling with the charge storage region (1) to affect the conductivity between the source (2) and drain (3) as a function of the displacement ($\delta x$) of the member (4).

2. A transducer according to claim 1 including means for applying a fixed voltage (U) between the charge storage region (1) and the movable body (4).

3. A transducer according to claim 1 or 2 wherein said charge storage region (1) comprises an electrically conductive island formed on a substrate, and means defining first and second tunnel junctions ($T_1$, $T_2$) coupling said source and drain respectively to the island.

4. A transducer according to claim 3 wherein said island comprises a metallic layer and said tunnel junctions ($T_1$, $T_2$) each comprise a further metallic layer overlying said island with layer of metal oxide therebetween.

5. A transducer according to any preceding claim used in a gravity wave detector.

6. A transducer according to any preceding claim used to detect displacement in an AFM.

## Patentansprüche

1. Verschiebungsmeßwandler mit

   einer Einrichtung zur Erzeugung eines Ladungsspeicherbereiches (1),
   einer Source (2) und einem Drain (3) für Ladungsträger nach dem Bereich, wobei der Ladungsfluß von der Source nach dem Drain durch den Ladungsspeicherbereich hindurch durch Coulomb-Blockade begrenzt wird, und einem beweglichen Glied (4), das eine kapazitive Kopplung mit dem Ladungsspeicherbereich (1) bildet, um die Leitfähigkeit zwischen der Source (2) und dem Drain (3) als eine Funktion der Verschiebung ($\delta x$) des Gliedes (4) zu beeinflussen.

2. Meßwandler nach Anspruch 1, der eine Einrichtung zum Anlegen einer festen Spannung (U) zwischen dem Ladungsspeicherbereich (1) und dem beweglichen Körper (4) enthält.

3. Meßwandler nach Anspruch 1 oder 2, bei dem der Ladungsspeicherbereich (1) eine auf einem Substrat gebildete elektrisch leitende Insel und eine Einrichtung aufweist, die erste und zweite Tunnelübergänge ($T_1$, $T_2$) bildet, welche die Source bzw. den Drain mit der Insel koppeln.

4. Meßwandler nach Anspruch 3, bei dem die Insel eine Metallschicht aufweist und die Tunnelübergänge ($T_1$, $T_2$) jeweils eine weitere Metallschicht aufweisen, die über der Insel liegt, mit einer Schicht Metalloxid dazwischen.

5. Meßwandler nach einem der vorhergehenden Ansprüche, der in einem Gravitationswellendetektor verwendet wird.

6. Meßwandler nach einem der vorhergehenden Ansprüche, der als Verschiebungsdetektor in einem Kraftmikroskop verwendet wird.

## Revendications

1. Transducteur de déplacement comprenant :

un moyen destiné à procurer une région de stockage de charges (1),

une source (2) et un drain (3) pour les porteurs de charges vers la région, la circulation des charges depuis la source vers le drain par l'intermédiaire de la région de stockage de charges étant limitée par le blocage de Coulomb, et un élément mobile (4) qui forme un couplage capacitif avec la région de stockage de charges (1) afin d'affecter la conductivité entre la source (2) et le drain (3) en fonction du déplacement ($\delta x$) de l'élément (4).

2. Transducteur selon la revendication 1 comprenant un moyen destiné à appliquer une tension fixe (U) entre la région de stockage de charges (1) et le corps mobile (4).

3. Transducteur selon la revendication 1 ou 2, dans lequel ladite région de stockage de charges (1) comprend un îlot électriquement conducteur formé sur un substrat, et un moyen définissant des première et seconde jonctions à effet tunnel ($T_1$, $T_2$) couplant ladite source et ledit drain, respectivement, à l'îlot.

4. Transducteur selon la revendication 3 dans lequel ledit îlot comprend une couche métallique et lesdites jonctions à effet tunnel ($T_1$, $T_2$) comprennent chacune une autre couche métallique recouvrant ledit îlot avec une couche d'oxyde métallique entre celles-ci.

5. Transducteur selon l'une quelconque des revendications précédentes, utilisé dans un détecteur d'ondes gravitationnelles.

6. Transducteur selon l'une quelconque des revendications précédentes, utilisé pour détecter un déplacement dans un microscope à force atomique (AFM).

# FIG.1

# FIG.2

# FIG.3

# FIG.5

# FIG.6

# FIG. 4

EP 0 612 973 B1